# EUROPEAN PATENT SPECIFICATION

(11) **EP 4 363 920 B1**
(45) Date of publication and mention of the grant of the patent: **06.05.2026**
(21) Application number: 22748547.1
(22) Date of filing: 29.06.2022
(51) Int. Cl.: G02B 27/00

(54) **HEATED CAMERAS AND RELATED METHODS**
BEHEIZTE KAMERAS UND ZUGEHÖRIGE VERFAHREN
CAMÉRAS CHAUFFÉES ET PROCÉDÉS ASSOCIÉS

(30) Priority: 02.07.2021 US 202163218258 P
(43) Date of publication of application: 08.05.2024
(73) Proprietor: Teledyne FLIR Commercial Systems, Inc., Goleta, CA 93117 (US)
(72) Inventor: FAIRFIELD, Nile E., Goleta, California 93117 (US); HALL, William J., Goleta, California 93117 (US); DISPENZA, Jace, Goleta, California 93117 (US); TAUBER, Sean, Goleta, California 93117 (US); OVRUTSKY, David, Goleta, California 93117 (US); LIN, Stephanie, Goleta, California 93117 (US)
(74) Representative: Murgitroyd & Company
(86) International application number: PCT/US2022/035580
(87) International publication number: WO 2023/278617

(56) References cited:
- EP-B1- 3 352 008
- WO-A1-2019/225745
- GB-A- 2 488 420
- US-A1- 2017 285 335

## Description

### TECHNICAL FIELD

The present invention relates to cameras that generated heat to reduce or eliminate ice formation or moisture condensation that can impair image quality.

### BACKGROUND

Ice or moisture can be deposited on camera elements in the optical path due to environmental conditions such as temperature changes, and the deposits may reduce image quality. To alleviate this problem, camera elements can be heated to melt/evaporate ice or moisture, or to prevent or reduce their formation. The present disclosure describes effective techniques associated with such heating.

WO 2019/225745 discloses a lens unit 100 including: a cylindrical lens barrel 10; and a plurality of lenses 1-4 which are disposed on the inner circumferential side of the lens barrel 10 and lined up along the axial direction of the lens barrel 10. A heater 40 that generates heat by conduction is disposed between: a flange section (flat section) 1b of the lens 1 which is disposed closest to the object side of the lens barrel 10; and a flange section (flat section) 2b of the lens 2 which is adjacent to the lens 1.

US 2017/285335 discloses an imaging system that includes a de-icing assembly. The de-icing assembly may include a de-icing window and a window frame. The de-icing window may be constructed from Float Zone Silicon, single crystal sapphire, and/or germanium. The de-icing assembly may be coupled to a lens barrel of a camera. Heat generated by a heater element of the camera may be conducted via the housing and the lens barrel of the camera to the de-icing assembly.

EP 3 352 008 discloses a camera module thin film heater comprising: an electrode; a thin film heating body electrically connected to the electrode and having a variable resistance corresponding to a heating temperature; and an insulating member surrounding the electrode and the thin film heating body.

### SUMMARY

Systems and methods are disclosed herein for preventing, reducing, or correcting image artifacts that could be caused by a heater.

According to a first aspect of the present invention, there is provided an apparatus according to claim 1. According to a second aspect of the present invention, there is provided a method according to claim 12.

The scope of the invention is defined by the claims. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 is a block diagram of a camera in accordance with an embodiment of the disclosure.
Fig. 2 is a perspective view of a camera with housing removed in accordance with an embodiment of the disclosure.
Figs. 3A, 3B, 4A, 4B are perspective views of camera portions in accordance with an embodiment of the disclosure.
Fig. 5 is a schematic top view of a camera heater in accordance with an embodiment of the disclosure.
Fig. 6 is a top view of a camera heater in accordance with an embodiment of the disclosure.
Fig. 7 is a cross sectional view of a camera portion in accordance with an embodiment of the disclosure.
Fig. 8 is a flowchart of image correction to remove heater-related artifacts in accordance with an embodiment of the disclosure.
Fig. 9 is a flowchart of a setup process (calibration process) for image correction to remove heater-related artifacts in accordance with an embodiment of the disclosure.
Figs. 10, 11, 12 show dark field images and pixel value graphs obtained in test results involving an embodiment of the disclosure.
Fig. 13 shows a scene image captured in accordance with an embodiment of the disclosure.

Embodiments of the invention and their advantages are best understood by referring to the detailed description that follows. It should be appreciated that like reference numerals are used to identify like elements illustrated in one or more of the figures.

### DETAILED DESCRIPTION

Techniques and mechanisms are provided to reduce or correct image artifacts caused by heating the camera.

The inventors have observed that heating a camera element can create image artifacts, especially in thermal (thermographic) cameras, due to stray thermal radiation caused by the heater. The inventors provide structural features and image processing techniques to reduce or eliminate such artifacts.

More particularly, the inventors have observed that the stray radiation emitted by the heater may heat up other camera elements, *e.g.* lenses, which can radiate heat towards the camera's imaging sensor, *i.e.* the sensor that converts thermal radiation to electrical signals to form an image. As a result, the image can be distorted. The problem can be particularly acute if the heater is placed inside the lens barrel, as is done in miniaturized cameras according to some embodiments of the present disclosure, because in such embodiments the barrel may be ineffective to protect the lens assembly from the radiation emitted by the heater.

Some embodiments of the present disclosure provide structural features and image processing techniques that reduce or eliminate the impact of stray radiation. The structural features may include a reflective surface positioned so as to reflect the stray radiation away from the sensor or other elements (like lenses) which, if heated, could emit stray radiation towards the sensor. For example, in some embodiments, the heater is positioned to heat the entrance window element of the camera to melt the ice or cause moisture evaporation at the entrance window, and the camera may include a reflector positioned between the heater and other camera elements, *e.g.* the lenses, to reflect the heater's stray radiation away from such elements. In some embodiments, the reflector reflects the stray radiation towards the entrance window, helping to heat the window.

In some embodiments, the reflector is provided by a shim (a washer) overlying the lens periphery between the lens and the heater. In some embodiments, the heater is a resistive electric heater, which heats the entrance window by thermal conduction or in some other way.

Some embodiments are particularly useful for miniaturized cameras, in which the entrance pupil is close to the entrance window and can be made small. Some of the lens periphery adjacent to the entrance window is not used for image formation, and can be used to support the heater and the reflector. In some embodiments the reflector shim acts as the aperture stop defining the entrance pupil.

In some embodiments, the heater and the reflector are located inside the lens barrel of the camera. The heater is controlled using a controller disposed inside the camera and connected to the heater by a cable disposed inside the barrel. A compact barrel structure is provided.

Also, image processing techniques are provided to reduce or eliminate heater-related artifacts. Such image processing techniques can be used regardless of whether the camera has a reflector described above. Such image processing techniques will be called "camera heater correction processes" herein. In some embodiments, camera heater correction involves a setup (calibration) stage, in which the image correction is measured by: capturing an image of a scene (possibly of a dark field) with the heater on; capturing an image of the same scene with the heater off; and calculating the difference between the two images. This setup process can be performed when there is no ice or moisture on the lens assembly, to make sure that the setup measures the artifacts caused by the heater and not by other factors.

Then in normal operation, as the camera captures images of scenes of interest with the heater on, the camera (or some other system) processes the captured images by subtracting the image difference obtained during the setup.

In some embodiments, the setup is performed at different ambient temperatures. Then, during normal operation, the camera measures the current ambient temperature and applies the image difference calculated during the setup at the same ambient temperature. More generally, the operation may involve parameters other than the ambient temperature. Thus, in some embodiments, the setup is performed with different parameter values, or combinations of parameter values, of predefined parameters, such as ambient temperature and/or heater temperature and/or heater power settings and/or entrance window temperature and/or barometric pressure and/or other parameters. The camera's memory is written with the image differences and the corresponding parameter values. In normal operation, the camera (or some other system) determines the parameter values present during the image capture, and the camera heater correction process applies the setup image difference corresponding to the setup parameter values closest to the values present during the image capture in normal operation.

In some embodiments, the setup process involves training an artificial intelligence model using the setup image differences obtained for various combinations of the values of pertinent parameters. Then in normal operation, the image correction is determined by the trained model which receives the new image and the current parameter values and generates a corrected image or an amount of correction to be used for the new image.

In some embodiments, the image processing is performed by a system other than the camera. Such outside system can receive the captured images and corresponding parameter values from the camera or some other source, possibly via a computer network or removable memory, or in some other way, and can receive the setup data described above, and can correct the image to reduce the heater-related artifacts as described above.

In some embodiments, the heater may distort the image even if the heater is off when the image is captured, because of the residual heat if the heater was on shortly before the image was captured. Therefore, one of the parameters used for camera heater correction can be the time interval from the time when the heater was last turned off to the time of the image capture. Other parameters may specify how long the heater was on, or other values of interest.

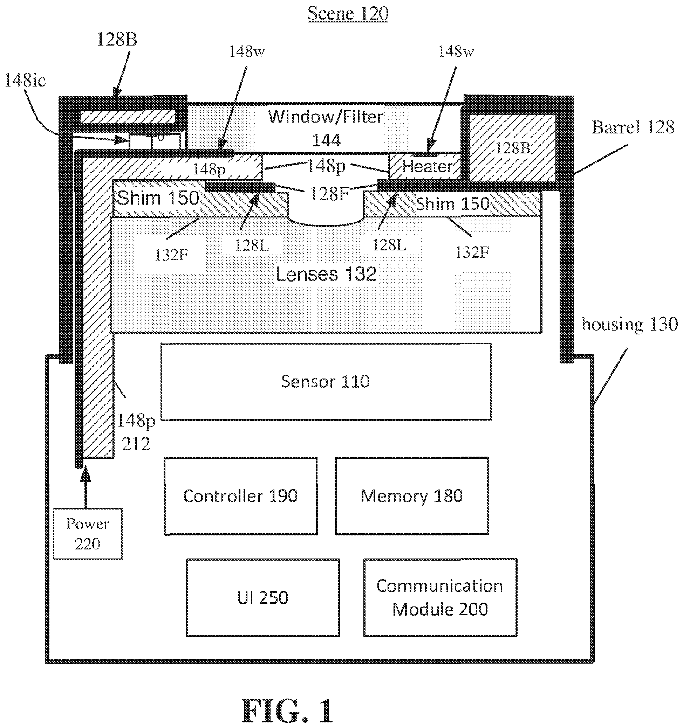

Fig. 1 is a schematic block diagram of an exemplary camera according to some embodiments of the present invention. The camera's image sensor 110 captures still or moving images of a scene or scenes 120. The camera may be a thermal camera, with sensor 110 capturing thermal images, *e.g.* in the wavelength band of 7 µm to 15 µm, but the invention is not limited to such wavelength band or other exemplary values that are given herein for illustration and not to limit the invention.

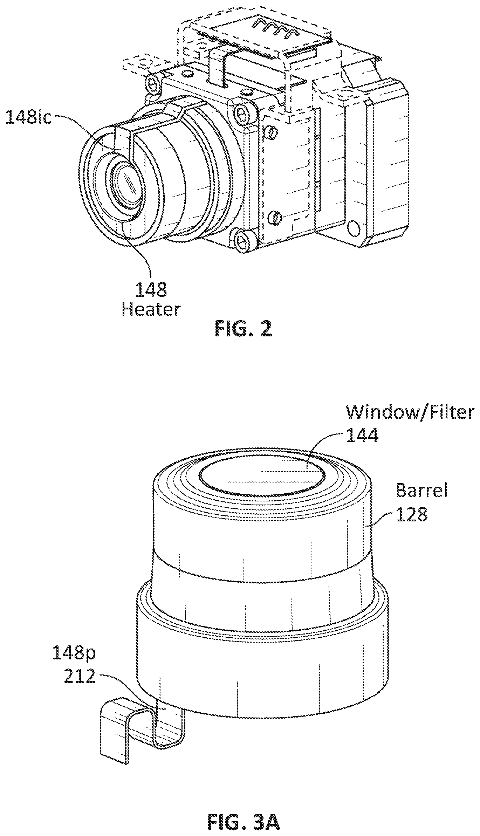

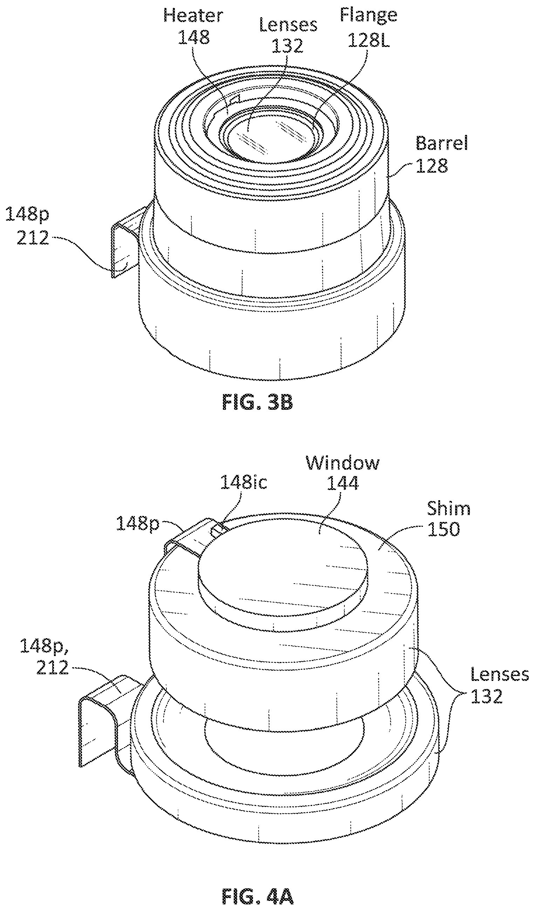

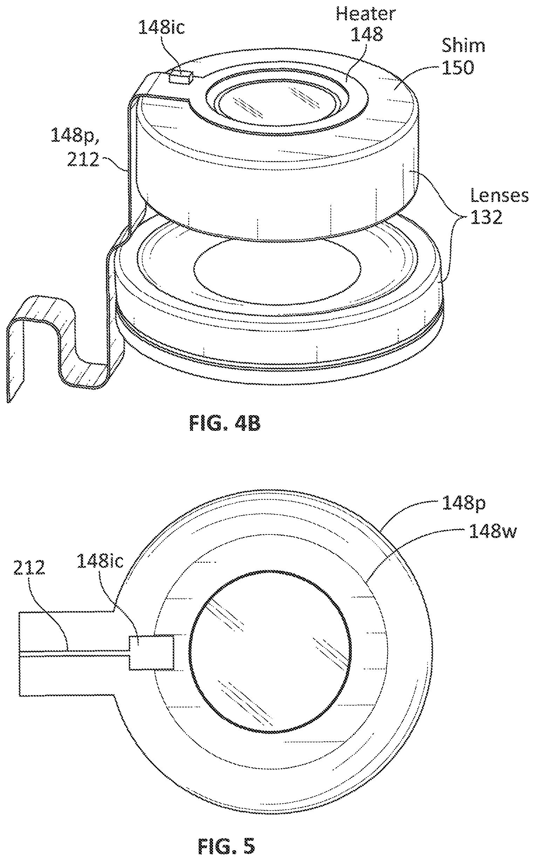

The camera includes lens barrel housing 128 and electronics housing 130. Fig. 2 shows a perspective view of the camera without barrel 128 and housing 130. Figs. 3A, 3B show perspective views of camera portions including the barrel 128. Figs. 4A, 4B show perspective views without barrel 128. Barrel 128 can be made of a thermally and electrically insulating material, *e.g.* plastic. In this disclosure, the material is considered thermally insulating if its thermal conductivity at 25°C is below 1 W/(m °K).

As shown in Fig. 1, barrel 128 includes an entrance window at the top, through which the light from scene 120 enters the camera. The aperture is blocked by window/filter piece 144 that protects the camera's internal parts and may server as a filter for the wavelengths of interest. In some embodiments, window piece 144 (also called "window" for short below) is a thermal infrared filter, possibly made of silicon, *e.g.* monocrystalline silicon, that passes the thermal infrared wavelengths of interest but blocks visible and other wavelengths. Also, window 144 may or may not have optical power. The light entering the window 144 passes through lenses 132 to reach the sensor 110.

Window 144 may rest on heater 148, shown as consisting of PCB 148p and electric wire 148w though other structures are also possible. In particular, heater 148 can be an electric resistive heater made as one or more metal traces *(e.g.* copper or aluminum or some other conductor) 148w. Fig. 5 illustrates schematically a top view of an exemplary heater. In this disclosure, the terms "top", "top view", or "bottom" refer to the orientation of Fig. 1. The "top" can also be called "front", and the "bottom" can be called "back" or "rear".

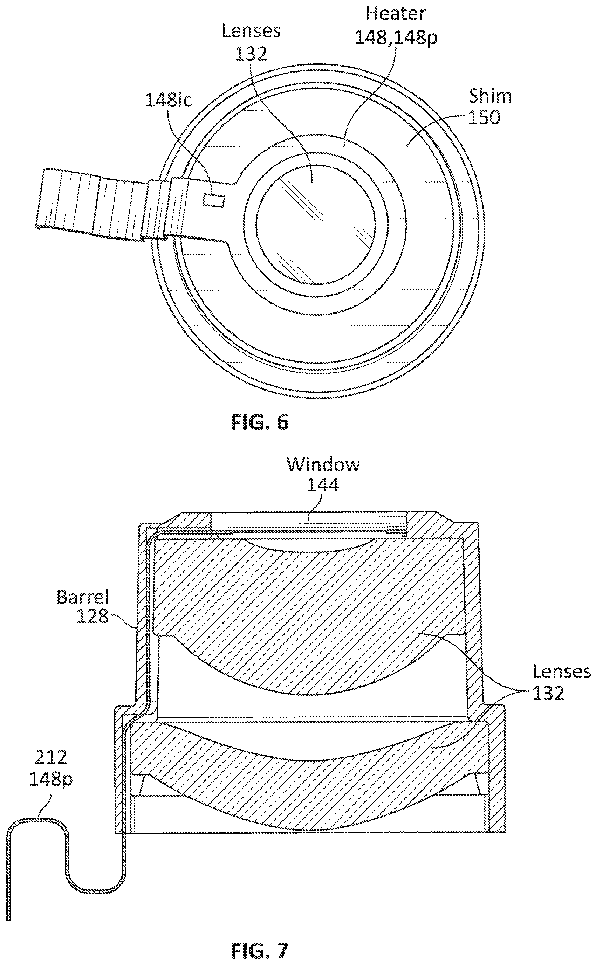

Fig. 6 shows a top view of the camera without the barrel and without window 144. The heater 148 is shown, but the traces 148w are not marked separately in Fig. 6. Figs. 1 and 5 show a single trace 148w, but any number of traces can be present.

In this embodiment, the trace 148w is formed on a rigid or flexible electrically insulating substrate 148p, *e.g.* flexible printed circuit board (PCB) made of flexible polyimide. The substrate has low thermal conductivity, *e.g.* below 1 W/(m °K). Window 144 may physically contact the trace(s) 148w so that the window is heated by thermal conduction, and/or window 144 may be at a distance above one or more of the traces, to be heated by radiation. The heater heats the window 144 to defrost (de-ice) the window, and/or cause moisture evaporation from the window, and/or prevent ice formation or moisture condensation on the window. In some embodiments, window 144 is made of a thermally conductive material, *e.g.* monocrystalline silicon (whose thermal conductivity is about 100 W/(m °K), to allow the heat from traces 148w to spread throughout the window.

Heater 148 can be implemented in any desired way. Traces 148w can be made of copper or another metal as noted above. The resistance of traces 148w can be set by adjusting the cross sectional area of the traces, and/or by replacing copper with materials having a higher sheet resistance, for example a cupronickel alloy, to obtain higher resistance in the same surface area. In other embodiments, traces 148w are made as printed conductive ink having a higher sheet resistance than copper. Copper foils and laminates can also be used. Some embodiments use embedded thin film resistance materials such as manufactured by Ticer Technologies, LLC, having an office in Chandler, Arizona, United States of America; or use OhmegaPly^{®} type of materials manufactured by Ohmega Technologies, Inc., having an office in Culver City, California, United States of America. Other options include the heating wire provided by TEMCO INDUSTRIAL LLC having an office in Fremont, California, United States of America. Other embodiments use PTC (Positive Temperature Coefficient) self-regulating material heaters provided by Bourns, Inc., having an office in Riverside, California, United States of America. In some embodiments, heater 148 is implemented on a rigid PCB with serially connected evenly spaced discrete resistors. Other options are also possible.

In an exemplary embodiment, shown in Figs. 2-6, trace 148w forms a loop whose ends are attached to an integrated circuit 148ic. Circuit 148ic may include a temperature sensor; and/or a heater controller that controls the electric power provided to traces 148w. Circuit 148ic may also implement a communication interface, *e.g.* of type I2C, in order to communicate with other camera circuits, *e.g.* controller 190 (Fig. 1), through a cable 212, *e.g.* a four-wire cable with two wires providing power to traces 148w and circuit 148ic, and two other wires providing control signals to circuit 148ic and providing feedback from circuit 148ic. Other wiring and wireless schemes are possible for communicating control signals and/or power to and/or from circuit 148ic or heater traces 148w. In some embodiments, some or all of the four wires may be replaced by camera lenses 132 acting as an electrical conductor if the lenses are made of an electrically conductive material. For example, in some embodiments, the return wire from heater trace 148w is replaced by electrically grounded lenses 132. If the lenses are plastic and not electrically conductive, then one or more of the wires may be embedded into the lenses. Other schemes are possible.

Circuit 148ic may provide a digital output indicating the temperature of trace 148w, or may provide an analog output digitized by another circuit, *e.g.* controller 190. For example, circuit 148ic may include a characterized diode with a known mapping from voltage to temperature, and the voltage can be mapped by controller 190.

Trace 148w can span a circular arc of almost 360° to provide uniform heating at the periphery of window 144. For example, in some embodiment, the trace 148w spans an arc of more than 350°. In some embodiments, trace 148w is not circular but has other shapes or trajectories, *e.g.* a serpentine trajectory, possibly encircling the shim's aperture multiple times. Multiple traces can also be used. A trace resistance can be, for example, 4Ω or higher. These particulars are not limiting.

Interconnection between camera electronics (*e.g*. controller 190) and the circuit 148ic may include wired and/or wireless connections. In some embodiments, the interconnection uses a cable 212 on the same flexible PCB 148p. In some embodiments, the entire cable 212, or at least the cable 212 wires that provide power and ground to traces 148w, have a low resistance to minimize heat dissipated by the cable. For example, in some embodiments, the heater trace 148w has a resistance of about 4Ω, and the interconnect wires of cable 212 that are continuations of traces 148w have a combined resistance of less than 0.1Ω.

As an alternative to PCB based implementation of cable 212, the cable 212 can be implemented using stamped metal lines embedded directly in plastic barrel 128 either on the inside or outside surface of the barrel. Such stamped metal lines can attach to connectors at the opposite ends for connection to other elements (*e.g*. heater trace 148w or circuit 148ic or camera electronics). Another possible implementation of cable 212 is MID/LDS (Molded Interconnect Devices, Laser Direct Structuring) processes that can form the cable 212 on the outside of plastic barrel 128. Other alternatives are possible.

The heater and/or the circuit 148ic can be powered and controlled in any suitable way, for example using regulated or unregulated battery power supply 220 (Fig. 1). For example, in some embodiments, the traces 148w are powered from the power supply's voltage source, *e.g.* 3.3V battery voltage; the power provided to traces 148w is controlled by controller 190 via pulse width modulation (PWM) in response to the temperature readings from circuit 148ic. Other heater control techniques are possible.

An exemplary heater control method is to turn the heater on in response to a reading from one or more sensors (*e.g.* in circuit 148ic and/or other sensors) indicating a certain combination of temperature, humidity, barometric pressure, and/or other conditions existing in the ambient and/or inside the barrel proximate to window 144. Alternatively or in addition, heater 148 can be turned on when image analysis conducted on the captured images shows blur or other artifacts indicative of presence of ice and/or condensed moisture on window 144. Such heater control methods can be performed automatically by controller 190 if the controller is suitably programmed. In some embodiments, such programming is performed using machine learning techniques. More particularly, an artificial neural network model can be defined to determine whether the heater should be on or off, and determine a desired power to be provided to the heater if the heater should be on. The model can be trained on training data collected under known conditions. For example, under known temperatures and other conditions (humidity, pressure, and/or others) within and/or without the barrel 124, and/or the known image blurring quantified in a suitable way, an operator can observe whether the heater should be turned on, and at what power. The desired power can be determined experimentally to be sufficient for melting the ice and/or removing condensed moisture and/or preventing the ice and/or moisture deposit on window 144. Such training data can be used to train the model. In normal operation, the temperatures and other pertinent parameters mentioned above can be continuously fed to the trained model to determine when to turn the heater on and at what power, and when to turn the heater off.

The model can be loaded into camera memory 180, and trained by the camera using camera controller 190. Alternatively, the model can be trained on another system, and the trained model can be loaded into memory 180 and executed by controller 190 in normal operation.

Alternatively or in addition, the heater can be turned on or off by an operator via user interface 250 (Fig. 1), which may include push buttons, switches, slides, voice command recognition, and/or other types of interfaces. Such user interface may also allow the user (operator) to specify the power to be provided to the heater, or may specify the temperature to be obtained at heater trace 148w, or may just specify whether the heater should be on or off, with the power being determined automatically using a trained model as described above. Alternatively or in addition, the user interface can be provided remotely to allow remote heater operation, e.g. via a computer network using camera communications module 200.

Heater 148 is supported from below by the barrel's ring-shaped flange 128L (Figs. 1, 3B). The flange 128L protrudes out of the barrel's boss (thickened upper wall) 128B. Boss 128B encircles the window 144 and the heater 148 except for a hole, at the left in Fig. 1, through which the heater PCB 148p and cable 212 pass to the barrel's wall portion located below the boss. The cable 212 and the PCB 148p run down along the barrel wall to camera electronics. In some embodiments, the entire barrel 128 with boss 128B and flange 128L are a single molded piece of plastic. These structural details, and other structural details described herein, are not limiting.

Ring-shaped reflective shim 150 (Figs. 1, 4A, 4B, 6), *e.g.* metal, is formed on the bottom side of flange 128L, and can be attached to flange 128L and/or the top lens 132. Shim 150 reflects thermal radiation from heater 148 upward towards window 144, to further heat the window and to protect the underlying components, such as lenses 132, from being heated by the heater's radiation. The shim may serve as an aperture stop defining the entrance pupil.

Shim 150 may be made of stainless steel, aluminum, chrome, or some other metal. In some embodiments, the metal is selected based on the available fabrication processes used to fabricate the shim; photo-chemical etching is used in some embodiments, but other processes are possible. In some embodiments, the shim serves as a stiffener to support the window 144 and heater 148. In some embodiments, the shim has a reflective top surface but is not reflective on the sides and bottom. For example, the shim can be formed of plastic or some other thermally insulating material, and the top surface can be covered by a film of chrome or some other metal. In some embodiments, the top surface reflectance in the thermal radiation wavelength band is over 90%, or over 99%. The plastic or other substrate may have thermal conductivity below 1 W/(m °K) at 25°C, or below 0.5 W/(m °K), or below 0.3 W/(m °K).

Shim 150 rests on the ring-shaped periphery 132F of top lens 132. The periphery is not used for image formation, and can be made as a flat flange. Shim 150 can be attached to lens flange 132F and/or barrel flange 128L.

Alternatively, reflector 150 can be made as a layer (*e.g.* metal layer) deposited on flange 132F by any suitable technique, *e.g.* Molded Interconnect Device technology (MID), printing, sputtering, electroplating, or some other technique.

In some embodiments, reflector 150 is formed on top of barrel flange 128L below the heater 148. Reflector 150 can be made as a separate integral part (a shim), or made by MID or some other process integrating the reflector with the top or bottom surface of barrel flange 128L.

Sensor 110 may be a focal plane array (FPA) or some other type. Sensor 110 may also include analog-to-digital converters to digitize the image. The image can be stored in memory 180. Suitable image processing can be done by controller 190 (e.g., a logic device), which can be a software or firmware programmed computer processor or a hardwired processor. Controller 190 may represent any number of controllers - the terms "controller" and "processor", as used herein, each may denote a combination of controllers or processors. One or more of such controllers, possibly all of them, can be provided externally, outside of the camera, possibly remotely, and can communicate with the camera over a computer network, *e.g.* the Internet, via the camera's communication module 200. Communication module 200 may provide wired and/or wireless connection to circuits and devices outside the camera. Alternatively, all the controllers can be within the camera. In some embodiments, communication module 200 is absent. For example, in some embodiments, memory 180 is a plug-in module, and such modules can be unplugged and plugged into other systems, *e.g.* other computers, to read the image data out of the memory; and to write the memory with programs and/or data used by the camera, *e.g.* programs defining operation of heater 148. The memory can then be plugged back into the camera, and the memory parameters can be read by controller 190. In some embodiments, communication module 200 can also allow communication between camera parts, for example between controller 190 and heater 148, and more particularly between controller 190 and heater control circuit 148ic. These details are exemplary and not limiting.

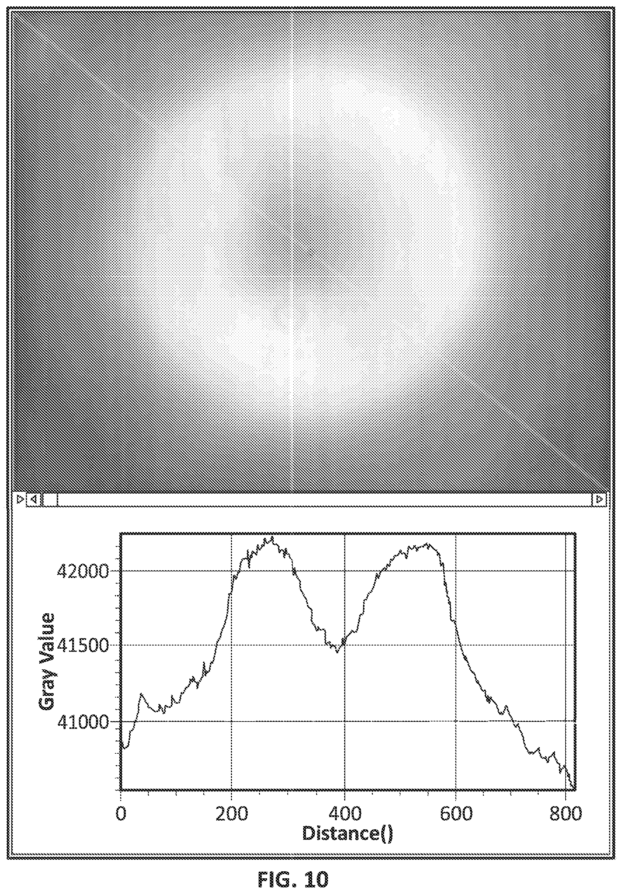

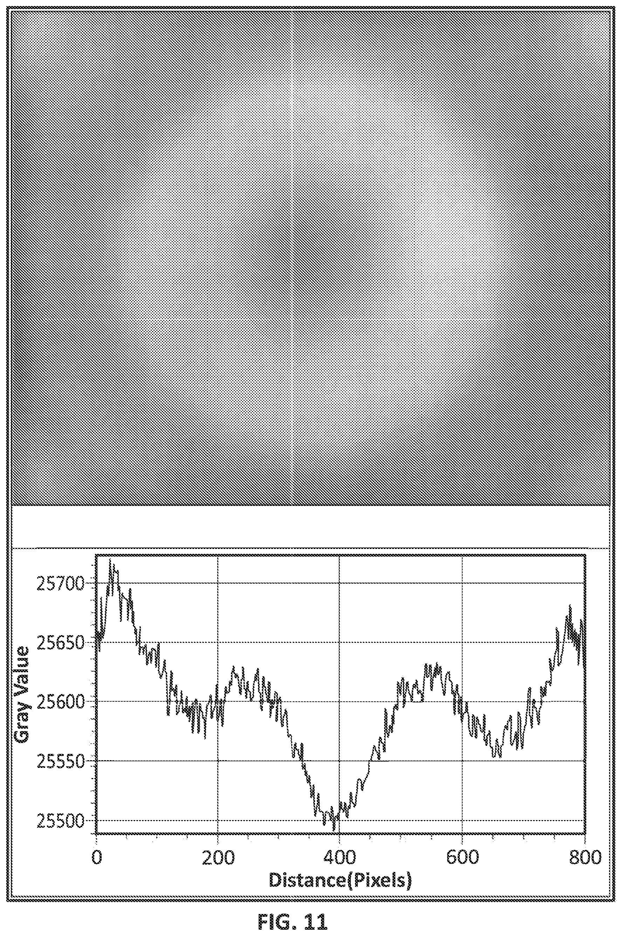

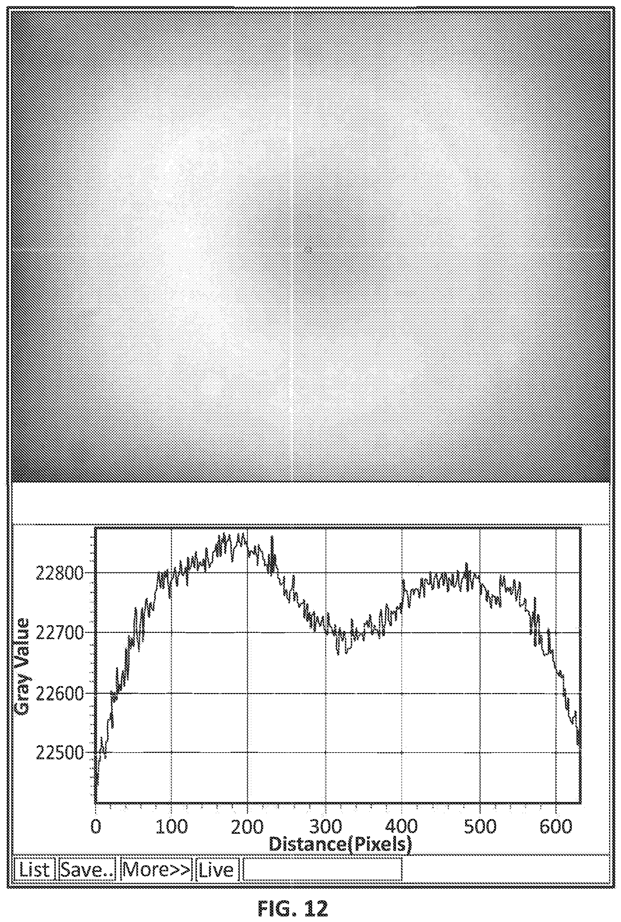

In a prototype testing, a shim reflector 150 was highly effective in reducing heater-related artifacts. In some embodiments, the use of shim reflector 150 may reduce artifact magnitude from approximately 700 digital counts down to approximately 120 digital counts. Figs. 10, 11, 12 illustrate a dark field image and a graph of corresponding pixel values in three tests. Each graph represents the digital counts (vertical axis) for the pixels extending along a cross-section of the corresponding dark field image. The tests of Figs. 10 and 11 used a camera that did not have a reflective surface 150. Fig. 10 was obtained when the heater was run at full power. Fig. 11 was obtained when the heater was controlled (e.g., modulated) to be at 35°C. Fig. 12 was obtained with a camera having a steel shim 150 as in Fig. 1; the heater was controlled to be at 35°C. The images were *not* processed for camera heater correction.

As seen in Figs. 10, 11, 12, the images have a bright ring with a dark disk in the middle. For the camera without the shim and the heater run at full power (Fig. 10), the dark disk's center is at about 700 digital counts below the brightest area of the ring; 600 digital counts correspond to about 0.5°C.

For the camera without the shim and the heater controlled to be at 35°C,(Fig. 11), the maximum brightness of the dark field image is reduced from about 42150 counts to about 27050 counts. In this regard, it will be appreciated that controlling the heater provides improved image quality.

For the camera with the heater controlled and also including the shim (Fig. 12), the image exhibits improved uniformity. For example, upon comparing the graphs shown in Figs. 10, 11, 12, it will be appreciated that Fig. 10 exhibits significant peaks and valleys, Fig. 11 exhibits some peaks and valleys but with a reduced range of counts, and Fig. 12 exhibits fewer peaks and valleys and increased uniformity.

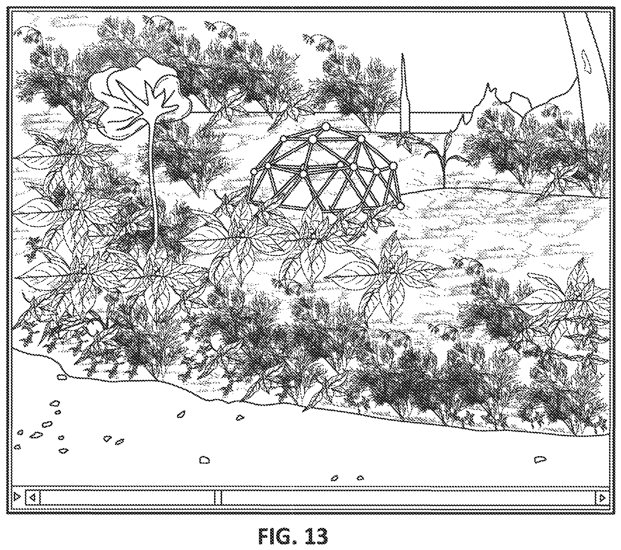

Fig. 13 shows an example high contrast image captured of a scene using the shim and the heater operating. As shown in Fig. 13, heater-related artifacts are not visible.

In these tests, the window 144 was monocrystalline silicon of 0.95 mm diameter and 0.95 mm thickness. Shim 150 was a stainless steel washer below barrel flange 128L, having an outer diameter of 14.5 mm, and having a thickness of 0.025 mm. The heater had a single copper trace 148w forming a loop of 8.0 - 9.0 mm diameter. The PCB strip 148p overlying the lens was a polyimide ring of 7.5 mm inner diameter and 9.4 mm outer diameter. Lenses 132 had two lenses made of chalcogenide glass. Barrel 128 diameter was 16.72 mm at the top, and 19.22 mm at the bottom around the bottom lens. These dimensions are exemplary and not limiting.

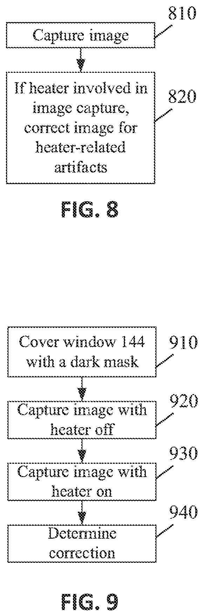

Some camera embodiments use image processing to reduce or eliminate image artifacts caused by the heater. Such camera embodiments may or may not have a reflector 150. The artifacts can be reduced or eliminated by image processing performed by controller 190 on captured images stored in memory 180, or performed at another computer system to which the captured images can be transferred. Fig. 8 shows a suitable process. The image is captured at step 810, and processed at step 820 to reduce or eliminate heater-related artifacts.

In some embodiments, step 820 is performed only if the heater was involved in image capture at step 810. For example, step 820 is performed only if the heater was on at step 810, or the heater had been on and was turned off only a short time before step 810 (a suitable time may be determined experimentally before the image capture). In other embodiments, the step 820 is performed only if the temperature reported by circuit 148ic was above the ambient temperature by at least a predefined amount (to be determined experimentally) to indicate heating impact at step 810.

In some embodiments, step 820 uses calibration data acquired as shown in Fig. 9. At step 910, window 144 is covered with a dark field mask. Then (step 920) the camera captures the image of the dark field mask with the heater off. At step 930, the heater is turned on, and is kept on until obtaining suitable parameters to be taken into account in normal operation at step 820. The parameters may include one or more of: heater temperature as reported by circuit 148ic; temperature near window 144 as reported by circuit 148ic; and/or time interval when the heater is on at a predefined power level (the power level is also a possible parameter); etc.. Then the camera captures the dark field mask image. At step 940, a correction is determined by comparing the images captured at steps 920 and 930. The correction can be stored in memory 180, and used at step 820. For example, the correction can be the difference between the two images captured at steps 920 and 930, and this difference is subtracted at step 820 from the image captured at step 810.

This setup process can be performed when there is no ice or moisture on the lens assembly, to make sure that the setup measures the artifacts caused by the heater and not by other factors.

Then in normal operation at step 820, as the camera captures images of scenes of interest with the heater on, the camera (or some other system) processes the captured images by subtracting the image difference obtained during the setup.

In some embodiments, the setup of Fig. 9 is performed at different ambient temperatures, and during normal operation at step 820 the camera measures the current ambient temperature and applies the image difference calculated during the setup at the same ambient temperature. More generally, in some embodiments, the setup of Fig. 9 is performed at different parameter values, or combinations of parameter values, of predefined parameters, e.g. ambient temperatures and/or heater temperatures as reported by circuit 148ic and/or heater power settings and/or entrance window temperatures and/or barometric pressures and/or other parameters. The camera's memory 180 is written with the image differences and the corresponding parameter values; each image difference is associated with the corresponding parameter values in memory 180. In normal operation at step 820, the camera determines the parameter values present during the image capture, and the camera heater correction process at step 820 applies the setup image difference corresponding to the setup parameter values closest to the values present during the image capture in normal operation.

In some embodiments, the setup process step 940 involves training a machine learning model using the image differences for various combinations of the values of pertinent parameters. In normal operation, the image correction is determined at step 820 by the trained machine model which receives the image and the current parameter values and generates a corrected image or an amount of correction to be used for the captured image.

In some embodiments, the image processing is performed by a system other than the camera. Such outside system can receive the captured images and corresponding parameter values from the camera or some other source, possibly via a computer network or removable memory, or in some other way, and can receive the setup data described above, and can correct the image to reduce the heater-related artifacts as described above.

In some embodiments, the heater may distort the image even if the heater is off when the image is captured, because of the residual heat if the heater was on shortly before the image was captured. Therefore, one of the parameters used for camera heater correction can be the time interval from the time when the heater was last turned off to the time of the image capture. Other parameters may specify how long the heater was on, or other values of interest.

In some embodiments, the setup of Fig. 9 is performed on one or more cameras, and the resulting image corrections, possibly with the associated parameter values, are used on other cameras. For example, the setup of Fig. 9 can be performed on a number of test cameras of a given design before mass producing the cameras. Then the mass produced cameras are produced with the setup data obtained for the test cameras.

Heater-related artifacts can also be reduced, for example, using Low Frequency Shading Reduction since the heater-related artifacts are likely to be low frequency. An example of Low Frequency Shading Reduction is described, for example, in U.S. Patent Publication US 2020/0005440 A1 (Applicant: FLIR Systems, Inc.), published January 2, 2020.

The invention is not limited to the embodiments discussed above. Where applicable, various embodiments provided by the present disclosure can be implemented using hardware, software, or combinations of hardware and software. Also where applicable, the various hardware components and/or software components set forth herein can be combined into composite components comprising software, hardware, and/or both without departing from the present disclosure. Where applicable, the various hardware components and/or software components set forth herein can be separated into sub-components comprising software, hardware, or both without departing from the present disclosure. In addition, where applicable, it is contemplated that software components can be implemented as hardware components, and vice-versa.

Software in accordance with the present disclosure, such as non-transitory instructions, program code, and/or data, can be stored on one or more non-transitory machine readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

Embodiments described above illustrate but do not limit the invention. It should also be understood that numerous modifications and variations are possible in accordance with the principles of the invention. Accordingly, the scope of the invention is defined only by the following claims.

## Claims

1. An apparatus comprising a lens assembly comprising:
a front region comprising an entrance window of the lens assembly, and a window structure at the entrance window;
a back region;
a lens (132) between the window structure and the back region; and
a heater (148) coupled to heat the window structure;
wherein the lens assembly comprises a reflective surface (150), wherein the front region is on a first side of the reflective surface, the back region is on a second side of the reflective surface, and the reflective surface is configured to reflect thermal radiation generated by the heater, the reflected thermal radiation being reflected towards the first side.

2. The apparatus of claim 1, wherein the reflective surface is configured to direct at least some of the reflected thermal radiation towards the window structure.

3. The apparatus of claim 1, wherein the lens is disposed on the second side of the reflective surface.

4. The apparatus of claim 1, wherein the reflective surface is a surface of an integral member.

5. The apparatus of claim 1, wherein the reflective surface is integrated with the lens.

6. The apparatus of claim 1, wherein the lens assembly comprises a barrel (128) comprising a flange (128L) between the window structure and the lens, the flange comprising the reflective surface.

7. The apparatus of claim 1, wherein the reflective surface comprises an aperture stop defining an entrance pupil of the lens assembly.

8. The apparatus of claim 1, wherein the window structure comprises a wavelength filter for thermal imaging.

9. The apparatus of claim 1, wherein the heater comprises a resistive heater.

10. The apparatus of claim 9, further comprising:
a barrel housing (128) that houses the lens and the heater; and
a cable (212) inside the barrel housing, the cable extending from the heater towards the back region, for providing electric power to the heater.

11. The apparatus of claim 1, further comprising an imaging sensor at the back region.

12. A method comprising:
heating by a heater (148) a window structure of an apparatus comprising a lens assembly comprising:
a front region comprising an entrance window of the lens assembly, wherein the window structure is located at the entrance window;
a back region;
a lens between the window structure and the back region; and
the heater;
a reflective surface (150), wherein the front region is on a first side of the reflective surface, and the back region is on a second side of the reflective surface; and
the method further comprises reflecting, by the reflective surface, thermal radiation generated by the heater, the reflected thermal radiation being reflected towards the first side.

13. The method of claim 12, wherein the reflecting comprises directing at least some of the reflected thermal radiation towards the window structure.

14. The method of any one or more of claims 12 or 13, wherein the reflecting comprises reflecting at least some of the reflected thermal radiation away from the sensor and/or the lens.

15. The method of any one or more of claims 12, 13, or 14, wherein:
the heater comprises a resistive heater;
the apparatus further comprises a barrel housing (128) that houses the lens and the heater; and
the heating comprises providing electric power to the heater via a cable (212) inside the barrel housing, the cable extending from the heater towards the back region.

## Patentansprüche

1. Eine Vorrichtung, die eine Linsenanordnung beinhaltet, die Folgendes beinhaltet:
einen vorderen Bereich, der ein Eintrittsfenster der Linsenanordnung und eine Fensterstruktur an dem Eintrittsfenster beinhaltet;
einen hinteren Bereich;
eine Linse (132) zwischen der Fensterstruktur und dem hinteren Bereich; und
eine Heizeinrichtung (148), die so gekoppelt ist, dass die Fensterstruktur erwärmt;
wobei die Linsenanordnung eine reflektierende Oberfläche (150) beinhaltet, wobei sich der vordere Bereich auf einer ersten Seite der reflektierenden Oberfläche befindet, sich der hintere Bereich auf einer zweiten Seite der reflektierenden Oberfläche befindet und die reflektierende Oberfläche so konfiguriert ist, dass sie von der Heizeinrichtung erzeugte thermische Strahlung reflektiert, wobei die reflektierte thermische Strahlung zu der ersten Seite hin reflektiert wird.

2. Vorrichtung gemäß Anspruch 1, wobei die reflektierende Oberfläche so konfiguriert ist, dass sie mindestens einen Teil der reflektierten thermischen Strahlung zu der Fensterstruktur hin lenkt.

3. Vorrichtung gemäß Anspruch 1, wobei die Linse auf der zweiten Seite der reflektierenden Oberfläche angeordnet ist.

4. Vorrichtung gemäß Anspruch 1, wobei die reflektierende Oberfläche eine Oberfläche eines integralen Elements ist.

5. Vorrichtung gemäß Anspruch 1, wobei die reflektierende Oberfläche in die Linse integriert ist.

6. Vorrichtung gemäß Anspruch 1, wobei die Linsenanordnung einen Tubus (128) beinhaltet, der einen Flansch (128L) zwischen der Fensterstruktur und der Linse beinhaltet, wobei der Flansch die reflektierende Oberfläche beinhaltet.

7. Vorrichtung gemäß Anspruch 1, wobei die reflektierende Oberfläche eine Aperturblende beinhaltet, die eine Eintrittspupille der Linsenanordnung definiert.

8. Vorrichtung gemäß Anspruch 1, wobei die Fensterstruktur einen Wellenlängenfilter zur thermischen Bildgebung beinhaltet.

9. Vorrichtung gemäß Anspruch 1, wobei die Heizeinrichtung eine Widerstandsheizeinrichtung beinhaltet.

10. Vorrichtung gemäß Anspruch 9, das ferner Folgendes beinhaltet:
ein Tubusgehäuse (128), das die Linse und die Heizeinrichtung unterbringt; und
ein Kabel (212) innerhalb des Tubusgehäuses, wobei sich das Kabel von der Heizeinrichtung zu dem hinteren Bereich erstreckt, um der Heizeinrichtung elektrische Leistung bereitzustellen.

11. Vorrichtung gemäß Anspruch 1, das ferner einen Bildsensor an dem hinteren Bereich beinhaltet.

12. Ein Verfahren, das Folgendes beinhaltet:
Erwärmen, durch eine Heizeinrichtung (148), einer Fensterstruktur einer Vorrichtung, die eine Linsenanordnung beinhaltet, die Folgendes beinhaltet:
einen vorderen Bereich, der ein Eintrittsfenster der Linsenanordnung beinhaltet, wobei sich die Fensterstruktur an dem Eintrittsfenster befindet;
einen hinteren Bereich;
eine Linse zwischen der Fensterstruktur und dem hinteren Bereich; und
die Heizeinrichtung;
eine reflektierende Oberfläche (150), wobei der vordere Bereich auf einer ersten Seite der reflektierenden Oberfläche befindlich ist und der hintere Bereich auf einer zweiten Seite der reflektierenden Oberfläche befindlich ist; und
das Verfahren ferner das Reflektieren der von der Heizeinrichtung erzeugten thermischen Strahlung durch die reflektierende Oberfläche beinhaltet, wobei die reflektierte thermische Strahlung zu der ersten Seite hin reflektiert wird.

13. Verfahren gemäß Anspruch 12, wobei das Reflektieren das Lenken von mindestens einem Teil der reflektierten thermischen Strahlung zu der Fensterstruktur hin beinhaltet.

14. Verfahren gemäß einem oder mehreren der Ansprüche 12 oder 13, wobei das Reflektieren das Reflektieren mindestens eines Teils der reflektierten thermischen Strahlung von dem Sensor und/oder der Linse weg beinhaltet.

15. Verfahren gemäß einem oder mehreren der Ansprüche 12, 13 oder 14, wobei:
die Heizeinrichtung eine Widerstandsheizeinrichtung beinhaltet;
die Vorrichtung ferner ein Tubusgehäuse (128) beinhaltet, das die Linse und die Heizeinrichtung unterbringt; und
das Erwärmen das Bereitstellen von elektrischer Leistung an die Heizeinrichtung über ein Kabel (212) innerhalb des Tubusgehäuses beinhaltet, wobei sich das Kabel von der Heizeinrichtung zu dem hinteren Bereich erstreckt.

## Revendications

1. Un appareil comprenant un ensemble à lentille comprenant :
une région avant comprenant une fenêtre d'entrée de l'ensemble à lentille, et une structure de fenêtre au niveau de la fenêtre d'entrée ;
une région arrière ;
une lentille (132) entre la structure de fenêtre et la région arrière ; et
un dispositif de chauffage (148) couplé pour chauffer la structure de fenêtre ;
dans lequel l'ensemble à lentille comprend une surface réfléchissante (150), la région avant étant sur un premier côté de la surface réfléchissante, la région arrière étant sur un deuxième côté de la surface réfléchissante, et la surface réfléchissante étant configurée pour réfléchir un rayonnement thermique généré par le dispositif de chauffage, le rayonnement thermique réfléchi étant réfléchi vers le premier côté.

2. L'appareil de la revendication 1, dans lequel la surface réfléchissante est configurée pour diriger au moins une partie du rayonnement thermique réfléchi vers la structure de fenêtre.

3. L'appareil de la revendication 1, dans lequel la lentille est disposée sur le deuxième côté de la surface réfléchissante.

4. L'appareil de la revendication 1, dans lequel la surface réfléchissante est une surface d'un élément solidaire.

5. L'appareil de la revendication 1, dans lequel la surface réfléchissante est solidaire de la lentille.

6. L'appareil de la revendication 1, dans lequel l'ensemble à lentille comprend un cylindre (128) comprenant une bride (128L) entre la structure de fenêtre et la lentille, la bride comprenant la surface réfléchissante.

7. L'appareil de la revendication 1, dans lequel la surface réfléchissante comprend un diaphragme d'ouverture définissant une pupille d'entrée de l'ensemble à lentille.

8. L'appareil de la revendication 1, dans lequel la structure de fenêtre comprend un filtre de longueur d'onde pour imagerie thermique.

9. L'appareil de la revendication 1, dans lequel le dispositif de chauffage comprend un dispositif de chauffage résistif.

10. L'appareil de la revendication 9, comprenant en outre :
un logement de cylindre (128) qui loge la lentille et le dispositif de chauffage ; et
un câble (212) à l'intérieur du logement de cylindre, le câble s'étendant du dispositif de chauffage vers la région arrière, pour la fourniture d'énergie électrique au dispositif de chauffage.

11. L'appareil de la revendication 1, comprenant en outre un capteur d'imagerie au niveau de la région arrière.

12. Un procédé comprenant :
le chauffage par un dispositif de chauffage (148) d'une structure de fenêtre d'un appareil comprenant un ensemble à lentille comprenant :
une région avant comprenant une fenêtre d'entrée de l'ensemble à lentille, la structure de fenêtre étant située au niveau de la fenêtre d'entrée ;
une région arrière ;
une lentille entre la structure de fenêtre et la région arrière ; et
le dispositif de chauffage ;
une surface réfléchissante (150), la région avant étant sur un premier côté de la surface réfléchissante, et la région arrière étant sur un deuxième côté de la surface réfléchissante ; et
le procédé comprenant en outre la réflexion, par la surface réfléchissante, d'un rayonnement thermique généré par le dispositif de chauffage, le rayonnement thermique réfléchi étant réfléchi vers le premier côté.

13. Le procédé de la revendication 12, dans lequel la réflexion comprend la direction d'au moins une partie du rayonnement thermique réfléchi vers la structure de fenêtre.

14. Le procédé de l'une quelconque ou de plusieurs des revendications 12 ou 13, dans lequel la réflexion comprend la réflexion d'au moins une partie du rayonnement thermique réfléchi loin du capteur et/ou de la lentille.

15. Le procédé de l'une quelconque ou de plusieurs des revendications 12, 13, ou 14, dans lequel :
le dispositif de chauffage comprend un dispositif de chauffage résistif ;
l'appareil comprend en outre un logement de cylindre (128) qui loge la lentille et le dispositif de chauffage ; et
le chauffage comprend la fourniture d'énergie électrique au dispositif de chauffage via un câble (212) à l'intérieur du logement de cylindre, le câble s'étendant du dispositif de chauffage vers la région arrière.
